# EUROPEAN PATENT SPECIFICATION

(11) **EP 2 928 005 B1**
(45) Date of publication and mention of the grant of the patent: **07.12.2016**
(21) Application number: 15161396.5
(22) Date of filing: 27.03.2015
(51) Int. Cl.: H01M 10/0567, H01M 10/0525, H01M 10/0569

(54) **ELECTROLYTE FOR LONG CYCLE LIFE SECONDARY BATTERY AND SECONDARY BATTERY CONTAINING THE SAME**
ELEKTROLYT FÜR SEKUNDÄRBATTERIE MIT LANGER LEBENSDAUER UND SEKUNDÄRBATTERIE DAMIT
ÉLECTROLYTE POUR BATTERIE SECONDAIRE À LONG CYCLE DE VIE ET BATTERIE SECONDAIRE CONTENANT CELUI-CI

(30) Priority: 02.04.2014 KR 20140039340
(43) Date of publication of application: 07.10.2015
(73) Proprietor: Panax Etec Co., Ltd., Busan 609-845 (KR)
(72) Inventor: Yoo, Seung Il, 306-765 Daejeon (KR); Yun, Su Ryeon, 683-390 Ulsan (KR); Kim, Young Gyu, 305-746 Daejeon (KR)
(74) Representative: Zinnecker, Armin

(56) References cited:
- EP-A1- 2 793 235
- JP-A- 2006 031 948
- CHIA-CHIN CHANG ET AL: "Vinylene carbonate and vinylene trithiocarbonate as electrolyte additives for lithium ion battery", JOURNAL OF POWER SOURCES, ELSEVIER SA, CH, vol. 196, no. 22, 16 June 2011 (2011-06-16), pages 9605-9611, XP028283692, ISSN: 0378-7753, DOI: 10.1016/J.JPOWSOUR.2011.06.058 [retrieved on 2011-07-19]

## Description

### CROSS-REFERENCE TO RELATED APPLICATIONS

This application claims priority under 35 U.S.C. §119 to Korean Patent Application No. 10-2014-0039340, filed on Apr 02, 2014, in the Korean Intellectual Property Office, the disclosure of which is incorporated herein by reference in its entirety.

### TECHNICAL FIELD

The following disclosure relates to a non-aqueous electrolyte for a secondary battery and a secondary battery containing the same, and more particularly, to a non-aqueous electrolyte for a secondary battery capable of improving room-temperature and high-temperature cycle life characteristics of a lithium secondary battery by containing a non-aqueous solvent, a lithium salt, and a 2-thioxo-1,3-dithiole-4,5-dicarboxylate compound as an electrolyte additive, and a secondary battery containing the same.

### BACKGROUND

A secondary battery means a chemical battery capable of being recharged unlike a primary battery to thereby be semi-permanently used. Recently, as various notebooks, mobile communication devices, digital cameras, and the like, have spread, a market for this secondary battery has increased exponentially. Particularly, recently, a secondary battery industry has rapidly grown as one of the top three component industries together with a semiconductor industry and a display industry.

As the secondary battery, there are a lead acid battery, a nickelcadmium (Ni-Cd) battery, a nickel-hydrogen (Ni-MH) battery, a lithium battery, and the like, depending on an anode material or cathode material, and a potential and energy density are determined by inherent characteristics of an electrode material. Among them, since a lithium secondary battery has high energy density due to a low oxidation/reduction potential and molecular weight of lithium, the lithium secondary battery has been frequently used as a driving power source of a portable electronic device such as a notebook, a camcorder, a mobile phone, or the like.

Among these lithium secondary batteries, in a lithium secondary battery using a non-aqueous electrolyte, a metal coated with a lithium metal mixed oxide which lithium ions may be separated from and inserted into as a cathode active material is used as a cathode, a metal coated with a carbon material, metal lithium, or the like, as an anode active material is used as an anode, and an electrolyte in which a lithium salt is suitably dissolved in an organic solvent is positioned between the cathode and the anode.

An average discharge voltage of the lithium secondary battery is about 3.6 to 3.7 V, such that the lithium secondary battery may obtain high power as compared to other alkaline batteries, Ni-MH batteries, Ni-Cd batteries, and the like. However, in order to obtain high driving voltage as described above, an electrolyte composition electrochemically stable at 0 to 4.2V, which is a charge and discharge voltage range, has been required. For this reason, a mixture of a non-aqueous carbonate-based solvent such as ethylene carbonate, dimethyl carbonate, diethyl carbonate, or the like, has been used as the electrolyte. However, the electrolyte having the composition as described above has significantly low ion conductivity as compared to an aqueous electrolyte used in the Ni-MH battery or the Ni-Cd battery, such that battery characteristics may be deteriorated at the time of high-rate charge and discharge.

At the time of initial charge of the lithium secondary battery, lithium ions released from a lithium metal oxide, which is a cathode, move to a carbon electrode, which is an anode, to thereby be intercalated into carbon. In this case, since lithium has strong reactivity, lithium reacts with the carbon electrode to generate Li₂CO₃, LiO, LiOH, or the like, thereby forming a coated film on a surface of the anode. This coating film is referred to as a solid electrolyte interface (SEI) film.

The SEI film formed in an early stage of charging the battery prevents a reaction of lithium ions with the carbon anode or other materials during charging and discharging the battery. In addition, the SEI film serves as an ion tunnel to pass only the lithium ions. The ion tunnel serves to prevent organic solvents of the electrolyte, having a large molecular weight and solvating the lithium ion to move together with lithium ion from being co-intercalated together with the lithium ion into the carbon anode to destroy a structure of the carbon anode. Therefore, when the SEI film was formed once, a side reaction between the lithium ion and the carbon anode or other materials is not generated, such that an amount of lithium ion is reversibly maintained.

Generally, in a non-aqueous electrolyte secondary battery, (1) particularly, at a high temperature, electrode resistance is increased by a reaction of a cathode active material such as lithium containing metal oxide, or the like, capable of occluding and releasing lithium and/or lithium ions and an electrolyte composed of a carbonate-based solvent and a lithium salt, (2) a SEI film formed on a surface of an anode active material capable of occluding and releasing lithium and/or lithium ions becomes slowly damaged at a high temperature due to continuous charge/discharge to accelerate an irreversible reaction of the battery, such that battery performance and efficiency may be significantly decreased.

Therefore, in order to improve storage performance and stability, the SEI film should be stably formed, and a method of improving stability, cycle life characteristics, and capacity of the battery is required.

In order to solve these problems, a method of using vinylene carbonate (VC) as an electrolyte additive capable of forming a SEI film on a surface of an anode has been disclosed in Japanese Patent Laid-Open Publication No. 1996-45545. However, VC may be easily decomposed in a cathode at the time of high temperature cycle or high temperature storage to generate gas, such that performance and stability of the battery may be deteriorated. In addition, a method of suppressing gas generation at a high temperature by using an unsaturated sultone-based compound has been disclosed in Japanese Patent Laid-Open Publication No. 2002-329528. A method of improving high-temperature preservation characteristics by using a carbonate-based compound including a vinyl group has been disclosed in Japanese Patent Laid-Open Publication No. 2001-006729. However, it is still difficult to firmly form the SEI film, such that problems in the related art have not been sufficiently solved. Document JP2006031948 discloses a non-aqueous electrolyte for a lithium secondary battery comprising a lithium salt, a non-aqueous solvent and a vinylene trithio carbonate.

Even though various electrolyte additives are used, these methods are insufficient for improving stability, cycle life characteristics, and capacity of the battery up to required levels.

### [Related Art Document]

### [Patent Document]

(Patent Document 1) Japanese Patent Laid-Open Publication No. 1996-45545
(Patent Document 2) Japanese Patent Laid-Open Publication No. 2002-329528
(Patent Document 3) Japanese Patent Laid-Open Publication No. 2001-006729

### SUMMARY

The present inventors conducted further studies on an electrolyte for a secondary battery and found that in the case of adding a 2-thioxo-1,3-dithiole-4,5-dicarboxylate compound including carboxylate and cyclic dithiole thione as an electrolyte additive in an electrolyte for a secondary battery, room-temperature and high-temperature electrochemical characteristics and cycle life characteristics were improved, thereby applying the present invention.

Therefore, an embodiment of the present invention is directed to providing a non-aqueous electrolyte for a lithium secondary battery capable of improving room-temperature and high-temperature cycle life characteristics without affecting characteristics of the battery by using a 2-thioxo-1,3-dithiole-4,5-dicarboxylate compound including carboxylate and cyclic dithiole thione as an electrolyte additive.

Another embodiment of the present invention is directed to providing a lithium secondary battery containing the non-aqueous electrolyte for a lithium secondary battery.

In one general aspect, a non-aqueous electrolyte for a lithium secondary battery contains: a lithium salt; a non-aqueous organic solvent; and a 2-thioxo-1,3-dithiole-4,5-dicarboxylate compound represented by the following Chemical Formula 1.

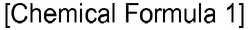

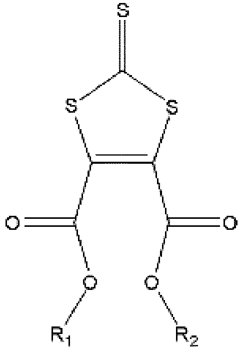

(In Chemical Formula 1, R₁ and R₂ are each independently alkyl having 1 to 5 carbon atoms or alkenyl having 2 to 5 carbon atoms.)

The 2-thioxo-1,3-dithiole-4,5-dicarboxylate compound of Chemical Formula 1 may be contained at a content of 0.01 to 10 wt% based on a total weight of the electrolyte.

The 2-thioxo-1,3-dithiole-4,5-dicarboxylate compound of Chemical Formula 1 may be selected from dimethyl 2-thioxo-1,3-dithiole-4,5-dicarboxylate and divinyl 2-thioxo-1,3-dithiole-4,5-dicarboxylate, but is not limited thereto.

The non-aqueous organic solvent may be a linear carbonate solvent, a cyclic carbonate solvent, a linear ester solvent, a cyclic ester solvent, or a mixed solvent thereof, wherein the linear carbonate solvent may be one or a mixture of two or more selected from the group consisting of dimethyl carbonate (DMC), diethyl carbonate (DEC), dipropyl carbonate (DPC), ethylpropyl carbonate (EPC), ethylmethyl carbonate (EMC), and methylpropyl carbonate (MPC), the cyclic carbonate-based solvent may be one or a mixture of two or more selected from the group consisting of ethylene carbonate (EC), propylene carbonate (PC), 1,2-butylene carbonate (BC), 2,3-butylene carbonate, 1,2-pentylene carbonate, 2,3-pentylene carbonate, vinylene carbonate (VC), vinylethylene carbonate, and fluoroethylene carbonate, the linear ester-based solvent may be one or a mixture of two or more selected from the group consisting of methyl propionate, ethyl propionate, propyl acetate, butyl acetate, and ethyl acetate, and the cyclic ester-based solvent may be one or a mixture of two or more selected from the group consisting of gamma-butyrolactone, caprolactone, and valerolactone.

In the non-aqueous organic solvent, a mixed volume ratio of the linear carbonate-based solvent and the cyclic carbonate-based solvent may be 1 to 9:1.

The lithium salt may be one or a mixture of two or more selected from the group consisting of LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiSCN, LiN(CₓF₂ₓ₊₁SO₂)(CyF_{2y+1}SO₂) (x and y are 0 or natural numbers), LiCl, Lil, LiB(C₂O₄)₂, LiF₂BC₂O₄, LiPF₄(C₂O₄), LiPF₂(C₂O₄)₂, LiP(C₂O₄)₃, and LiPO₂F₂.

The lithium salt may be contained at a concentration of 0.6 to 2.0 M.

In another general aspect, a lithium secondary battery containing the non-aqueous electrolyte for a lithium secondary battery includes: a) a cathode containing a cathode active material capable of occluding and releasing lithium; b) an anode containing an anode active material capable of occluding and releasing lithium; c) the non-aqueous electrolyte for a lithium secondary battery as described above; and d) a separator.

### DETAILED DESCRIPTION OF EMBODIMENTS

Hereinafter, the present invention will be described in more detail. Here, technical terms and scientific terms used in the present specification have the general meaning understood by those skilled in the art to which the present invention pertains unless otherwise defined, and a description for the known function and configuration unnecessarily obscuring the gist of the present invention will be omitted in the following description.

The present invention relates to a non-aqueous electrolyte for a lithium secondary battery capable of providing a secondary battery of which room-temperature and high-temperature electrochemical characteristics and cycle life characteristics are improved, and a lithium secondary battery containing the same.

The present invention provides a non-aqueous electrolyte for a lithium secondary battery containing: a lithium salt; a non-aqueous organic solvent; and a 2-thioxo-1,3-dithiole-4,5-dicarboxylate compound represented by the following Chemical Formula 1.

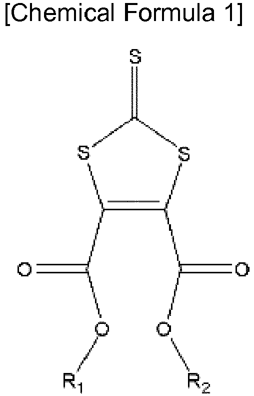

(In Chemical Formula 1, R₁ and R₂ are each independently alkyl having 1 to 5 carbon atoms or alkenyl having 2 to 5 carbon atoms.)

The non-aqueous electrolyte for a lithium secondary battery according to the present invention contains the 2-thioxo-1,3-dithiole-4,5-dicarboxylate compound of Chemical Formula 1 as an electrolyte additive, wherein the 2-thioxo-1,3-dithiole-4,5-dicarboxylate compound of Chemical Formula 1 has a structure including carboxylate and cyclic dithiole thione. The cyclic dithiole thione is reduced and decomposed at an anode to form a SEI film made of a compound composed of Li₂S, carbon, and sulfur, and this film suppresses decomposition of a solvent but has a disadvantage in that resistance is large. However, since a carboxylate substituent acting as an electron acceptor is introduced to decrease a lowest unoccupied molecular orbital (hereinafter, referred to as "LUMO") value of the additive, at the time of charging, the additive is reduced and decomposed earlier than the non-aqueous organic solvent to react with lithium ions, thereby more efficiently forming a solid electrolyte interface (SEI) film of the anode significantly affecting performance of the battery. Therefore, the electrolyte additive may add an O component to the SEI film while more efficiently blocking decomposition of the non-aqueous organic solvent in the electrolyte to form a strong film having low resistance, thereby making it possible to allow lithium ions to be easily intercalated into a surface of an electrode. As a result, room-temperature and high-temperature cycle life characteristics of the battery may be improved.

That is, the non-aqueous electrolyte for a lithium secondary battery according to the present invention contains the 2-thioxo-1,3-dithiole-4,5-dicarboxylate compound of Chemical Formula 1, such that the non-aqueous electrolyte is electrochemically stable as compared to an existing electrolyte for a secondary battery, thereby improving high-temperature cycle life characteristics of the battery as well as room-temperature cycle life characteristics thereof.

In the non-aqueous electrolyte for a lithium secondary battery according to an exemplary embodiment of the present invention, the 2-thioxo-1,3-dithiole-4,5-dicarboxylate compound of Chemical Formula 1 may be contained at a content of 0.01 to 10 wt%, more preferably 0.1 to 2 wt%, based on a total weight of the electrolyte. In the case in which the content of the 2-thioxo-1,3-dithiole-4,5-dicarboxylate compound of Chemical Formula 1 is less than 0.01 wt%, the SEI film is not effectively formed, such that an effect of increasing cycle life, or the like, of the lithium secondary battery, may become insufficient, and in the case in which the content is more than 10 wt%, a thick SEI film having high resistance is formed, such that an effect of increasing charge and discharge efficiency may become insufficient, and cycle life performance may be deteriorated.

In more detail, the 2-thioxo-1,3-dithiole-4,5-dicarboxylate compound of Chemical Formula 1 may be selected from the group consisting of dimethyl 2-thioxo-1,3-dithiole-4,5-dicarboxylate, divinyl 2-thioxo-1,3-dithiole-4,5-dicarboxylate, and a mixture thereof.

In the non-aqueous electrolyte for a lithium secondary battery according to an exemplary embodiment of the present invention, the non-aqueous organic solvent may be a linear carbonate solvent, a cyclic carbonate solvent, a linear ester solvent, a cyclic ester solvent, or a mixed solvent thereof, but preferably, the non-aqueous organic solvent may be the linear carbonate solvent, the cyclic carbonate solvent, or a mixed solvent thereof. Most preferably, the linear carbonate solvent and the cyclic carbonate solvent may be mixed and used. The cyclic carbonate solvent may sufficiently dissociate lithium ions due to large polarity, but has a disadvantage in that ion conductivity thereof is small due to a large viscosity. Therefore, characteristics of the lithium secondary battery may be optimized by mixing the linear carbonate solvent having a small polarity and a low viscosity with the cyclic carbonate solvent and using the mixture.

The linear carbonate solvent may be one or a mixture of two or more selected from the group consisting of dimethyl carbonate (DMC), diethyl carbonate (DEC), dipropyl carbonate (DPC), ethylpropyl carbonate (EPC), ethylmethyl carbonate (EMC), and methylpropyl carbonate (MPC), the cyclic carbonate solvent may be one or a mixture of two or more selected from the group consisting of ethylene carbonate (EC), propylene carbonate (PC), 1,2-butylene carbonate (BC), 2,3-butylene carbonate, 1,2-pentylene carbonate, 2,3-pentylene carbonate, vinylene carbonate (VC), vinylethylene carbonate, and fluoroethylene carbonate, the linear ester solvent may be one or a mixture of two or more selected from the group consisting of methyl propionate, ethyl propionate, propyl acetate, butyl acetate, and ethyl acetate, and the cyclic ester solvent may be one or a mixture of two or more selected from the group consisting of gamma-butyrolactone, caprolactone, and valerolactone.

In the non-aqueous electrolyte for a lithium secondary battery according to an exemplary embodiment of the present invention, the non-aqueous organic solvent is the mixed solvent of the linear carbonate solvent and the cyclic carbonate solvent, and a mixed volume ratio of the linear carbonate solvent and the cyclic carbonate solvent may be 1 to 9:1. In view of the cycle life characteristics and preservation characteristics of the battery, it is most preferable to use a mixed solvent in which the linear carbonate solvent and the cyclic carbonate solvent are mixed at a volume ratio 2:8 to 8:2.

Preferably, in the non-aqueous electrolyte for a lithium secondary battery according to an exemplary embodiment of the present invention, the non-aqueous organic solvent may be ethylene carbonate, propylene carbonate, ethylmethyl carbonate, or a mixed solvent thereof.

In the non-aqueous electrolyte for a lithium secondary battery according to an exemplary embodiment of the present invention, the lithium salt may be one or a mixture of two or more selected from LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiSCN, LiN(CₓF₂ₓ₊₁SO₂)(CyF_{2y+1}SO₂) (x and y are 0 or natural numbers), LiCl, Lil, LiB(C₂O₄)₂, LiF₂BC₂O₄, LiPF₄(C₂O₄), LiPF₂(C₂O₄)₂, LiP(C₂O₄)₃, and LiPO₂F₂, but is not limited thereto. Preferably, the lithium salt may be lithium hexafluorophosphate (LiPF₆).

It is preferable that the lithium salt is used in a concentration range of 0.6 to 2.0 M, and considering properties associated with electric conductivity and viscosity associated with mobility of lithium ion, it is more preferable that the lithium salt is used in a concentration range of 0.8 to 1.5 M. In the case in which the concentration of the lithium salt is less than 0.6 M, electric conductivity of the electrolyte is decreased, such that performance of the electrolyte rapidly transferring ions between a cathode and an anode of the secondary battery is deteriorated, and in the case in which the concentration is more than 2.0 M, the viscosity of the electrolyte is increased, such that mobility of the lithium ion may be decreased. The lithium salt acts as a supply source of the lithium ion in the battery to enable a basic operation of the lithium secondary battery.

Since generally, the non-aqueous electrolyte for a lithium secondary battery according to the present invention is electrochemically stable in a temperature range of -20°C to 60°C, at the time of applying the non-aqueous electrolyte to the lithium secondary battery, cycle life of the battery may be increased, and stability and reliability of the lithium secondary battery may be improved. Therefore, the non-aqueous electrolyte may be applied to any lithium secondary battery such as a lithium ion battery, a lithium polymer battery, or the like, without limitation.

In addition, the present invention provides a lithium secondary battery including: a) a cathode containing a cathode active material capable of occluding and releasing lithium; b) an anode containing an anode active material capable of occluding and releasing lithium; c) the non-aqueous electrolyte for a lithium secondary battery; and d) a separator.

The lithium secondary battery is manufactured by a general method, and the battery manufactured using an electrolyte containing the electrolyte additive according to the present invention has excellent room-temperature and high-temperature cycle life characteristics.

A non-restrictive example of the secondary battery may include a lithium metal secondary battery, a lithium ion secondary battery, a lithium polymer secondary battery, a lithium ion polymer secondary battery, or the like.

The cathode according to an exemplary embodiment of the present invention contains a current collector and a cathode active material layer formed on the current collector. The cathode active material layer may contain the cathode active material capable of occluding and releasing lithium, a binder, a conductive material, or the like. As the cathode active material, a composite metal oxide of at least one selected from cobalt, manganese, and nickel, and lithium may be preferable. A solid-solution rate between the metals may be various, and an element selected from the group consisting of Mg, Al, Co, K, Na, Ca, Si, Ti, Sn, V, Ge, Ga, B, As, Zr, Mn, Cr, Fe, Sr, V, and rare earth elements may be further contained in addition to the above-mentioned metals. As a specific example of the cathode active material, a compound represented by any one of the following Chemical Formulas may be used.

LiₐA_{1-b}B_{b}D₂ (0.90 ≤ a ≤ 1.8 and 0 ≤ b ≤ 0.5); LiₐE_{1-b}B_{b}O_{2-c}D_{c} (0.90 ≤ a ≤ 1.8, 0 ≤ b ≤ 0.5, 0 ≤ c ≤ 0.05); LiE_{2-b}B_{b}O_{4-c}D_{c} (0 ≤ b ≤ 0.5, 0 ≤ c ≤ 0.05); LiₐNi_{1-b-c}Co_{b}B_{c}D_{α} (0.90 ≤ a ≤ 1.8, 0 ≤ b ≤ 0.5, 0 ≤ c ≤ 0.05, 0 < α ≤ 2); LiₐNi_{1-b-c}Co_{b}B_{c}O_{2-α}F_{α} (0.90 ≤ a ≤ 1.8, 0 ≤ b ≤ 0.5, 0 ≤ c ≤ 0.05, 0 < α < 2); LiₐNi_{1-b-c}CO_{b}B_{c}O_{2-α}F₂ (0.90 ≤ a ≤ 1.8, 0 ≤ b ≤ 0.5, 0 ≤ c ≤ 0.05, 0 < α < 2); LiₐNi_{1-b-c}Mn_{b}B_{c}D_{α} (0.90 ≤ a ≤ 1.8, 0 ≤ b ≤ 0.5, 0 ≤ c ≤ 0.05, 0 ≤ α ≤ 2); LiₐNi_{1-b-c}Mn_{b}B_{c}O_{2-α}F_{α} (0.90 ≤ a ≤ 1.8, 0 ≤ b ≤ 0.5, 0 ≤ c ≤ 0.05, 0 < α < 2); LiₐNi_{1-b-c}Mn_{b}B_{c}O_{2-α}F₂ (0.90 ≤ a ≤ 1.8, 0 ≤ b ≤ 0.5, 0 ≤ c ≤ 0.05, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GeO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMnG_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); QO₂; QS₂; LiQS₂; V₂O₅; LiV₂O₅; LilO₂; LiNiVO₄; Li_{(3-f)}J₂ (PO₄)₃ (0≤ f ≤ 2); Li _{(3-f)}Fe₂ (PO₄)₃ (0≤ f ≤ 2); and LiFePO₄.

In the Chemical Formulas, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

The anode according to an exemplary embodiment of the present invention contains a current collector and an anode active material layer formed on the current collector. The anode active material layer may contain the anode active material capable of occluding and releasing lithium, a binder, a conductive material, or the like. As the anode active material, a carbon material such as crystalloid carbon, amorphous carbon, a carbon composite, carbon fiber, or the like, a lithium metal, an alloy of lithium and another element, or the like, may be used. Examples of the amorphous carbon may include hard carbon, cokes, mesocarbon microbead (MCMB) sintered at a temperature of 1500°C or less, mesophase pitch-based carbon fiber (MPCF), and the like. Examples of the crystalloid carbon include graphite-based materials, more specifically, natural graphite, graphitized cokes, graphitized MCMB, graphitized MPCF, and the like. As the carbon material, a material of which an interplanar distance is 3.35 to 3.38 Å, and a crystallite size Lc measured by X-ray diffraction is at least 20 nm or more may be preferable. Another element forming the alloy with lithium may be aluminum, zinc, bismuth, cadmium, antimony, silicon, lead, tin, gallium, or indium.

The cathode and/or the anode according to an exemplary embodiment of the present invention may be prepared by dispersing an electrode active material, a binder, and a conductive material, and if necessary, a thickener, in a solvent to prepare an electrode slurry composition, and applying this electrode slurry composition onto an electrode current collector. As a cathode current collector, aluminum, an aluminum alloy, or the like, may be generally used, and as an anode current collector, copper, a copper alloy, or the like, may be generally used. The cathode current collector and the anode current collector have a foil or mesh shape.

The binder according to an exemplary embodiment of the present invention is a material playing a role in paste formation of an active material, adhesion between the active materials, adhesion with the current collector, and a buffering effect on expansion and contraction of the active material, and the like, and any material may be used as long as it may be generally used by those skilled in the art. For example, polyvinylalcohol, carboxymethyl cellulose, hydroxypropyl cellulose, diacetyl cellulose, polyvinyl chloride, carboxylated polyvinyl chloride, polyvinyl fluoride, polyethyleneoxide, polyvinylpyrrolidone, polyurethane, polytetrafluoroethylene, polyvinylidene fluoride (PVdF), a polyhexafluoropropylene-polyvinylidene fluoride copolymer (PVdF/HFP), poly(vinylacetate), alkylated polyethyleneoxide, polyvinylether, poly(methylmethacrylate), poly(ethylacrylate), polyacrylonitrile, polyvinylpyridine, polyethylene, polypropylene, styrene-butadiene rubber, acrylated styrene-butadiene rubber, acrylonitrile-butadiene rubber, an epoxy resin, nylon, and the like, may be used, but the present invention is not limited thereto. A content of the binder is 0.1 to 30 wt%, preferably 1 to 10 wt% based on the electrode active material. In the case in which the content of the binder is excessively low, adhesive force between the electrode active material and the current collector may become insufficient, and in the case in which the content of the binder is excessively high, adhesive force may be improved, but a content of the electrode active material is decreased in accordance with the content of the binder, which is disadvantageous for high capacity of the battery.

The conductive material according to an exemplary embodiment of the present invention is used to impart conductivity to the electrode, and any materials may be used as the conductive material as long as it does not cause a chemical change in a battery to be formed and has electron conductivity. As the conductive material, at least one selected from the group consisting of a graphite-based conductive material, a carbon black-based conductive material, and a metal-based or metal compound-based conductive material may be used. Examples of the graphite-based conductive material may include artificial graphite, natural graphite, and the like, examples of the carbon black-based conductive material may include acetylene black, Ketjen black, Denka black, thermal black, channel black, and the like, and examples of the metal-based or metal compound-based conductive material may include tin, tin oxide, tin phosphate (SnPO₄), titanium oxide, potassium titanate, a perovskite material such as LaSrCoO₃ and LaSrMnO₃. However, the conductive material is not limited thereto. A content of the conductive material is preferably 0.1 to 10 wt% based on the electrode active material. In the case in which the content of the conductive material is less than 0.1 wt%, electrochemical properties may be deteriorated, and in the case in which the content is more than 10 wt%, energy density per weight may be decreased.

As the thickener according to an exemplary embodiment of the present invention, any thickener may be used without limitation as long as it may serve to adjust a viscosity of active material slurry, but for example, carboxymethyl cellulose, hydroxymethyl cellulose, hydroxyethyl cellulose, hydroxypropyl cellulose, or the like, may be used.

As the solvent in which the electrode active material, the binder, the conductive material, and the like, are dispersed, a non-aqueous solvent or aqueous solvent may be used. Examples of the non-aqueous solvent may include N-methyl-2-pyrrolidone (NMP), dimethylformamide, dimethylacetamide, N,N-dimethylaminopropylamine, ethyleneoxide, tetrahydrofuran, or the like.

The secondary battery according to the present invention may include a separator preventing a short-circuit between the cathode and the anode and providing a movement path of the lithium ion. As the separator as described above, a polyolefin-based polymer membrane made of polypropylene, polyethylene, polyethylene/polypropylene, polyethylene/polypropylene/polyethylene, polypropylene/polyethylene/polypropylene, or the like, or a multilayer thereof, a micro-porous film, and woven fabric and non-woven fabric may be used. In addition, a film in which a resin having excellent stability is coated on a porous polyolefin film may be used.

The secondary battery according to the present invention may have another shape such as a cylindrical shape, a pouch shape, or the like, in addition to an angular shape.

Hereinafter, the present invention will be described in detail through Examples. However, the following Examples are only to illustrate the present invention, and the scope of the present invention is not limited to Examples.

### [Example 1]

After LiCoO₂ as a cathode active material, polyvinylidene fluoride (PVdF) as a binder, and carbon black as a conductive material were mixed at a weight ratio of 92:4:4 and then dispersed in N-methyl-2-pyrrolidone, thereby preparing cathode slurry. This slurry was coated on aluminum foil having a thickness of 20 *µ*m, dried, and rolled, thereby preparing a cathode.

After crystalline artificial graphite as an anode active material, and acetylene black as a conductive material, and polyvinylidene fluoride (PVdF) as a binder were mixed at a weight ratio of 92:1:7 and then dispersed in N-methyl-2-pyrrolidone, thereby preparing anode active material slurry. This slurry was coated on copper foil having a thickness of 15 *µ*m, dried, and rolled, thereby preparing an anode.

A film separator made of a polyethylene (PE) material and having a thickness of 20 *µ*m was stacked between the prepared electrodes, wound, and compressed, and a cell was configured using a pouch having a size of 6 mm x 35 mm x 60 mm (thickness x width x length), followed by injection of the following non-aqueous electrolyte, thereby manufacturing a lithium secondary battery.

The non-aqueous electrolyte was prepared by dissolving LiPF₆ in an ethylene carbonate (EC)/ethylmethyl carbonate (EMC) mixed solvent (EC:EMC = 3:7 (volume ratio)) so as to have a concentration of 1.0 M and adding 1 wt% of dimethyl 2-thioxo-1,3-dithiole-4,5-dicarboxylate thereto.

### [Example 2]

A secondary battery was manufactured by the same method as in Example 1 except for adding 0.5 wt% of dimethyl 2-thioxo-1,3-dithiole-4,5-dicarboxylate.

### [Example 3]

A secondary battery was manufactured by the same method as in Example 1 except for adding 1 wt% of divinyl 2-thioxo-1,3-dithiole-4,5-dicarboxylate instead of adding 1 wt% of dimethyl 2-thioxo-1,3-dithiole-4,5-dicarboxylate to the non-aqueous electrolyte of Example 1.

### [Example 4]

A secondary battery was manufactured by the same method as in Example 1 except for adding 0.5 wt% divinyl 2-thioxo-1,3-dithiole-4,5-dicarboxylate instead of adding 1 wt% of dimethyl 2-thioxo-1,3-dithiole-4,5-dicarboxylate to the non-aqueous electrolyte of Example 1.

### [Comparative Example 1]

A secondary battery was manufactured by the same method as in Example 1 except that 1 wt% of dimethyl 2-thioxo-1,3-dithiole-4,5-dicarboxylate was not added to the non-aqueous electrolyte of Example 1.

### [Physical Property Evaluation 1: Room-Temperature (25°C) Cycle Life Characteristics Evaluation]

Each of the secondary batteries manufactured in Examples 1 to 4 and Comparative Example 1 was charged up to 4.2 V at 1C and then discharged at 2C. This process was repeated 300 times, thereby measuring cycle life characteristics (cycle performance). The cycle performance evaluation was performed at room temperature (25°C).

Initial discharge capacity, discharge capacity after 300 cycles, a percentage of the discharge capacity after 300 cycles to the initial discharge capacity, and an increased percentage as compared to Comparative Example 1 were shown in the following Table 1.

**[Table 1]**

| | 2C Initial Discharge Capacity (mAh) | Discharge Capacity after 300 cycles (mAh) | Cycle Life after 300 cycles (%) | Increased percentage (%) (as compared to Comparative Example 1) |
|---|---|---|---|---|
| Example 1 | 855.4 | 836.7 | 97.8 | 9.0 |
| Example 2 | 867.7 | 854.3 | 98.4 | 9.6 |
| Example 3 | 858.4 | 800.4 | 93.2 | 4.4 |
| Example 4 | 854.1 | 816.4 | 95.6 | 6.8 |
| Comparativ e Example 1 | 868.7 | 772.1 | 88.8 | - |

As shown in Table 1, in the secondary batteries of Examples 1 to 4 according to the present invention, even after 300 cycles, the percentage of the discharge capacity to the initial discharge capacity was increased as compared to the secondary battery of Comparative Example 1 using the electrolyte that did not contain the electrolyte additive, such that cycle life characteristics thereof were stable.

As shown in Evaluation 1, it may be appreciated that the 2-thioxo-1,3-dithiole-4,5-dicarboxylate compound added to the electrolyte according to the present invention forms an efficient SEI film composed of C, S, and O elements in the anode to improve room-temperature cycle life characteristics.

### [Physical Property Evaluation 2: High-Temperature (45°C) Cycle Life Characteristics Evaluation]

Each of the secondary batteries manufactured in Examples 1 to 4 and Comparative Example 1 was charged up to 4.2 V at 1C and then discharged at 2C. This process was repeated 300 times, thereby measuring cycle life characteristics (cycle performance). The cycle performance evaluation was performed at a high temperature (45°C).

Initial discharge capacity, discharge capacity after 300 cycles, a percentage of the discharge capacity after 300 cycles to the initial discharge capacity, and an increased percentage as compared to Comparative Example 1 were shown in the following Table 2.

**[Table 2]**

| | 2C Initial Discharge Capacity (mAh) | Discharge Capacity after 300 cycles (mAh) | Cycle Life after 300 cycles (%) | Increased percentage (%) (as compared to Comparative Example 1) |
|---|---|---|---|---|
| Example 1 | 903.77 | 829.5 | 91.8 | 0.9 |
| Example 2 | 922.33 | 862.5 | 93.5 | 2.6 |
| Example 3 | 911.6 | 831.4 | 91.2 | 0.3 |
| Example 4 | 898.1 | 828.4 | 92.2 | 1.3 |
| Comparativ e Example 1 | 878.65 | 798.8 | 90.9 | - |

As shown in Table 2, in the secondary batteries of Examples 1 to 4 according to the present invention, even after 300 cycles, the percentage of the discharge capacity to the initial discharge capacity was increased as compared to the secondary battery of Comparative Example 1 using the electrolyte that did not contain the electrolyte additive, such that cycle life characteristics thereof were stable.

As shown in Evaluation 2, it may be appreciated that the 2-thioxo-1,3-dithiole-4,5-dicarboxylate compound added to the electrolyte according to the present invention forms an efficient SEI film composed of C, S, and O elements in the anode to improve high-temperature cycle life characteristics.

The non-aqueous electrolyte for a lithium secondary battery according to the present invention contains the 2-thioxo-1,3-dithiole-4,5-dicarboxylate compound including carboxylate and cyclic dithiole thione as the electrolyte additive, such that at the time of discharging the battery at room temperature and a high temperature, the 2-thioxo-1,3-dithiole-4,5-dicarboxylate compound may be decomposed earlier to the organic solvent contained in the electrolyte to effectively and stably form the solid electrolyte interface (SEI) film on the anode surface and allow the lithium ion to be easily intercalated into the surface of the electrode, thereby making it possible to improve room-temperature and high-temperature electrochemical characteristics and cycle life characteristics of the battery.

Although the exemplary embodiments of the present invention have been disclosed in detail, those skilled in the art will appreciate that various modifications are possible, without departing from the scope of the present invention as disclosed in the accompanying claims. Accordingly, such modifications of the exemplary embodiment of the present invention should also be understood to fall within the scope of the present invention as defined in the claims.

## Claims

1. A non-aqueous electrolyte for a lithium secondary battery comprising:
a lithium salt;
a non-aqueous organic solvent; **characterized in that** it further comprises
a 2-thioxo-1,3-dithiole-4,5-dicarboxylate compound represented by the following Chemical Formula 1: 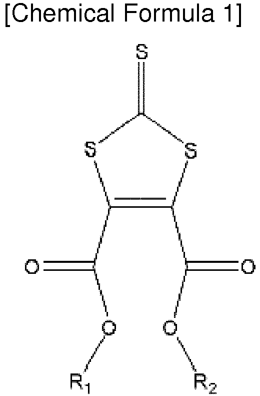
(in Chemical Formula 1, R₁ and R₂ are each independently alkyl having 1 to 5 carbon atoms or alkenyl having 2 to 5 carbon atoms).

2. The non-aqueous electrolyte for a lithium secondary battery of claim 1, wherein the 2-thioxo-1,3-dithiole-4,5-dicarboxylate compound of Chemical Formula 1 is contained at a content of 0.01 to 10 wt% based on a total weight of the electrolyte.

3. The non-aqueous electrolyte for a lithium secondary battery of claim 1, wherein the 2-thioxo-1,3-dithiole-4,5-dicarboxylate compound of Chemical Formula 1 is selected from dimethyl 2-thioxo-1,3-dithiole-4,5-dicarboxylate, and divinyl 2-thioxo-1,3-dithiole-4,5-dicarboxylate.

4. The non-aqueous electrolyte for a lithium secondary battery of claim 1, wherein the non-aqueous organic solvent is a linear carbonate-based solvent, a cyclic carbonate solvent, a linear ester solvent, a cyclic ester solvent, or a mixed solvent thereof.

5. The non-aqueous electrolyte for a lithium secondary battery of claim 4, wherein the linear carbonate solvent is one or a mixture of two or more selected from the group consisting of dimethyl carbonate (DMC), diethyl carbonate (DEC), dipropyl carbonate (DPC), ethylpropyl carbonate (EPC), ethylmethyl carbonate (EMC), and methylpropyl carbonate (MPC), the cyclic carbonate solvent is one or a mixture of two or more selected from the group consisting of ethylene carbonate (EC), propylene carbonate (PC), 1,2-butylene carbonate (BC), 2,3-butylene carbonate, 1,2-pentylene carbonate, 2,3-pentylene carbonate, vinylene carbonate (VC), vinylethylene carbonate, and fluoroethylene carbonate, the linear ester solvent is one or a mixture of two or more selected from the group consisting of methyl propionate, ethyl propionate, propyl acetate, butyl acetate, and ethyl acetate, and the cyclic ester solvent is one or a mixture of two or more selected from the group consisting of gamma-butyrolactone, caprolactone, and valerolactone.

6. The non-aqueous electrolyte for a lithium secondary battery of claim 4, wherein in the non-aqueous organic solvent, a mixed volume ratio of the linear carbonate solvent and the cyclic carbonate solvent is 1 to 9:1.

7. The non-aqueous electrolyte for a lithium secondary battery of claim 1, wherein the lithium salt is one or a mixture of two or more selected from the group consisting of LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiSCN, LiN(CₓF₂ₓ₊₁SO₂)(CyF_{2y+1}SO₂) (x and y are 0 or natural numbers), LiCl, Lil, LiB(C₂O₄)₂, LiF₂BC₂O₄, LiPF₄(C₂O₄), LiPF₂(C₂O₄)₂, LiP(C₂O₄)₃, and LiPO₂F₂.

8. The non-aqueous electrolyte for a lithium secondary battery of claim 1, wherein the lithium salt is contained at a concentration of 0.6 to 2.0 M.

9. A lithium secondary battery comprising:
a) a cathode containing a cathode active material capable of occluding and releasing lithium;
b) an anode containing an anode active material capable of occluding and releasing lithium;
c) the non-aqueous electrolyte for a lithium secondary battery of any one of claims 1 to 8; and
d) a separator.

## Patentansprüche

1. Nicht wässriger Elektrolyt für eine Lithiumsekundärbatterie, umfassend:
ein Lithiumsalz;
ein nicht wässriges organisches Lösungsmittel;
**dadurch gekennzeichnet, dass** er weiterhin umfasst
eine 2-Thioxo-1,3-dithiol-4,5-dicarboxylat-Verbindung, dargestellt durch die folgende chemische Formel 1: 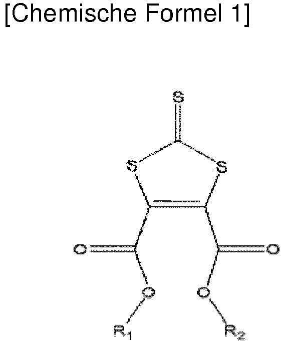 (in der chemischen Formel 1 sind R₁ und R₂ jeweils unabhängig Alkyl mit 1 bis 5 Kohlenstoffatomen oder Alkenyl mit 2 bis 5 Kohlenstoffatomen).

2. Nicht wässriger Elektrolyt für eine Lithiumsekundärbatterie nach Anspruch 1, wobei die 2-Thioxo-1,3-dithiol-4,5-dicarboxylat-Verbindung der chemischen Formel 1 beruhend auf einem Gesamtgewicht des Elektrolyts bei einem Anteil von 0,01 bis 10 Gew.-% enthalten ist.

3. Nicht wässriger Elektrolyt für eine Lithiumsekundärbatterie nach Anspruch 1, wobei die 2-Thioxo-1,3-dithiol-4,5-dicarboxylat-Verbindugn der chemischen Formel 1 gewählt ist aus Dimethyl-2-thioxo-1,3-dithiol-4,5-dicarboxylat und Divinyl-2-thioxo-1,3-dithiol-4,5-dicarboxylat.

4. Nicht wässriger Elektrolyt für eine Lithiumsekundärbatterie nach Anspruch 1, wobei das nicht wässrige organische Lösungsmittel ein geradkettiges carbonatbasiertes Lösungsmittel, ein zyklisches Carbonatlösungsmittel, ein geradkettiges Esterlösungsmittel, ein zyklisches Esterlösungsmittel oder ein Mischlösungsmittel davon ist.

5. Nicht wässriger Elektrolyt für eine Lithiumsekundärbatterie nach Anspruch 4, wobei das geradkettige Carbonatlösungsmittel eines oder eine Mischung von zwei oder mehr gewählt aus der Gruppe bestehend aus Dimethylcarbonat (DMC), Diethylcarbonat (DEC), Dipropylcarbonat (DPC), Ethylpropylcarbonat (EPC), Ethylmethylcarbonat (EMC) und Methylpropylcarbonat (MPC) ist, das zyklische Carbonatlösungsmittel eines oder eine Mischung von zwei oder mehr gewählt aus der Gruppe bestehend aus Ethylencarbonat (EC), Propylencarbonat (PC), 1,2-Butylencarbonat (BC), 2,3-Butylencarbonat, 1,2-Pentylencarbonat, 2,3-Pentylencarbonat, Vinylencarbonat (VC), Vinylethylencarbonat und Fluorethylencarbonat ist, das geradkettige Esterlösungsmittel eines oder eine Mischung von zwei oder mehr gewählt aus der Gruppe bestehend aus Methylpropionat, Ethylpropionat, Propylacetat, Butylacetat und Ethylacetat ist und das zyklische Esterlösungsmittel eines oder eine Mischung von zwei oder mehr gewählt aus der Gruppe bestehend aus Gamma-butyrolacton, Caprolacton und Valerolacton ist.

6. Nicht wässriger Elektrolyt für eine Lithiumsekundärbatterie nach Anspruch 4, wobei in dem nicht wässrigen organischen Lösungsmittel ein Mischvolumenverhältnis des geradkettigen Carbonatlösungsmittels und des zyklischen Carbonatlösungsmittels 1 bis 9:1 beträgt.

7. Nicht wässriger Elektrolyt für eine Lithiumsekundärbatterie nach Anspruch 1, wobei das Lithiumsalz eines oder eine Mischung von zwei oder mehr gewählt aus der Gruppe bestehend aus LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiSCN, LiN(CₓF₂ₓ₊₁SO₂)(C_{y}F_{2y+1}SO₂) (x und y sind 0 oder natürliche Zahlen), LiCl, Lil, LiB(C₂O₄)₂, LiF₂BC₂O₄, LiPF₄(C₂O₄), LiPF₂(C₂O₄)₂, LiP(C₂O₄)₃ und LiPO₂F₂ ist.

8. Nicht wässriger Elektrolyt für eine Lithiumsekundärbatterie nach Anspruch 1, wobei das Lithiumsalz bei einer Konzentration von 0,6 bis 2,0 M enthalten ist.

9. Lithiumsekundärbatterie, umfassend:
a) eine Kathode, die ein aktives Kathodenmaterial enthält, das Lithium okkludieren und freisetzen kann;
b) eine Anode, die ein aktives Anodenmaterial enthält, das Lithium okkludieren und freisetzen kann;
c) den nicht wässrigen Elektrolyt für eine Lithiumsekundärbatterie nach einem der Ansprüche 1 bis 8; und
d) einen Separator.

## Revendications

1. Électrolyte non aqueux pour batterie secondaire au lithium comprenant :
un sel de lithium ;
un solvent organique non aqueux ;
**caractérisé en ce qu'**il comprend également
un composé 2-thioxo-1,3-dithiole-4,5-dicarboxylate représenté par la Formule chimique 1 suivante : 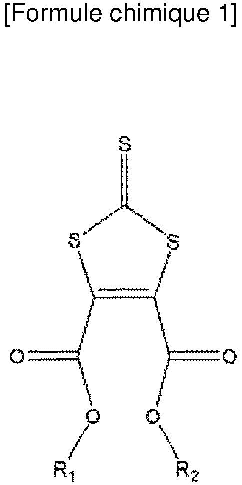 (dans la Formule chimique 1, R₁ et R₂ sont chacun indépendamment un alkyle ayant de 1 à 5 atomes de carbone ou un alcényle ayant de 2 à 5 atomes de carbone).

2. Électrolyte non aqueux pour batterie secondaire au lithium selon la revendication 1, le composé 2-thioxo-1,3-dithiole-4,5-dicarboxylate de Formule chimique 1 étant présent à une teneur de 0,01 à 10 % en poids sur la base d'un poids total de l'électrolyte.

3. Électrolyte non aqueux pour batterie secondaire au lithium selon la revendication 1, le composé 2-thioxo-1,3-dithiole-4,5-dicarboxylate de Formule chimique 1 étant choisi parmi le 2-thioxo-1,3-dithiole-4,5-dicarboxylate de diméthyle et le 2-thioxo- 1,3-dithiole-4,5-dicarboxylate de divinyle.

4. Électrolyte non aqueux pour batterie secondaire au lithium selon la revendication 1, le solvant organique non aqueux étant un solvant à base de carbonate linéaire, un solvant carbonate cyclique, un solvant ester linéaire, un solvant ester cyclique ou un solvant mixte constitué de ceux-ci.

5. Électrolyte non aqueux pour batterie secondaire au lithium selon la revendication 4, le solvant carbonate linéaire étant un solvant ou un mélange de deux solvants ou plus choisis dans le groupe constitué du carbonate de diméthyle (DMC), carbonate de diéthyle (DEC), carbonate de dipropyle (DPC), carbonate d'éthyle et de propyle (EPC), carbonate d'éthyle et de méthyle (EMC) et carbonate de méthyle et de propyle (MPC), le solvant carbonate cyclique étant un solvant ou un mélange de deux solvants ou plus choisis dans le groupe constitué du carbonate d'éthylène (EC), carbonate de propylène (PC), carbonate de 1,2-butylène (BC), carbonate de 2,3-butylène, carbonate de 1,2-pentylène, carbonate de 2,3-pentylène, carbonate de vinylène (VC), carbonate de vinyléthylène et carbonate de fluoroéthylène, le solvant ester linéaire étant un solvant ou un mélange de deux solvants ou plus choisis dans le groupe constitué du propionate de méthyle, propionate d'éthyle, acétate de propyle, acétate de butyle et acétate d'éthyle, et le solvant ester cyclique étant un solvant ou un mélange de deux solvants ou plus choisis dans le groupe constitué de la gamma-butyrolactone, caprolactone et valérolactone.

6. Électrolyte non aqueux pour batterie secondaire au lithium selon la revendication 4 où, dans le solvant organique non aqueux, un rapport volumique mixte du solvant carbonate linéaire et du solvant carbonate cyclique va de 1 à 9:1.

7. Électrolyte non aqueux pour batterie secondaire au lithium selon la revendication 1, le sel de lithium étant un sel ou un mélange de deux sels ou plus choisis dans le groupe constitué de LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiSCN, LiN(CₓF₂ₓ₊₁SO₂)(C_{y}F_{2y+1}SO₂) (x et y sont nuls ou des nombres naturels), LiCl, Lil, LiB(C₂O₄)₂, LiF₂BC₂O₄, LiPF₄(C₂O₄), LiPF₂(C₂O₄)₂, LiP(C₂O₄)₃ et LiPO₂F₂.

8. Électrolyte non aqueux pour batterie secondaire au lithium selon la revendication 1, le sel de lithium étant présent à une concentration de 0,6 à 2,0 M.

9. Batterie secondaire au lithium comprenant :
a) une cathode contenant un matériau actif de cathode capable de fixer et de relâcher du lithium ;
b) une anode contenant un matériau actif d'anode capable de fixer et de relâcher du lithium ;
c) l'électrolyte non aqueux pour batterie secondaire au lithium selon l'une quelconque des revendications 1 à 8 ; et
d) un séparateur.
